# EUROPEAN PATENT SPECIFICATION

(11) **EP 1 657 976 B1**
(45) Date of publication and mention of the grant of the patent: **16.01.2008**
(21) Application number: 04775298.5
(22) Date of filing: 09.08.2004
(51) Int. Cl.: A01J 5/04, A01J 5/08

(54) **A TUBULAR HOSE DEVICE**
RÖHRENFÖRMIGE SCHLAUCHVORRICHTUNG
DISPOSITIF DE TUYAU FLEXIBLE TUBULAIRE

(30) Priority: 26.08.2003 SE 0302292
(43) Date of publication of application: 24.05.2006
(73) Proprietor: DeLaval Holding AB, 147 21 Tumba (SE)
(72) Inventor: ÄLVEBY, Nils, S-117 50 Stockholm (SE)
(74) Representative: Keijser Bergöö, Malin Katarina
(86) International application number: PCT/SE2004/001175
(87) International publication number: WO 2005/018308

(56) References cited:
- WO-A1-00/76298
- US-A- 4 196 696
- US-A- 4 869 205
- US-A- 5 080 041

## Description

### THE BACKGROUND OF THE INVENTION AND PRIOR ART

The present invention refers to a tubular hose device according to the preamble of claim 1, see WO 00/76298.

Such a hose device may be employed in a short milk conduit of a milking system. The short milk conduit is usually manufactured in a rubber-like material and extends between a teatcup and an inlet nipple of a claw of a milking member. The short milk conduit may be a separate hose or may be a part of a teatcup liner, which is mounted in the shell of the teatcup. The short milk conduit is attached to the inlet nipple of the claw, which nipple typically is designed as a short obliquely cut pipe, in such a way that the nipple is introduced into the inner channel of the conduit. During milking, the short milk conduit extends substantially straight, or along a smooth curve, from the inlet nipple to the teatcup. After a milking operation and between the milking operations, the short milk conduit is bent at the inlet nipple. The purpose of this bending is to close the short milk conduit in order to prevent air from being sucked into the teatcup and the milking system when the teatcup is not attached to the teat. An efficient closing of the conduit is obtained by means of the obliquely cut inlet nipple, wherein the wall of the inner passage of the short milk conduit abuts sealingly the end surface of the inlet nipple.

One problem by such a hose device in the context of milking is that the hose device is subjected to shocks caused by the animal. For instance, the milking member can be kicked by the animal or fall down onto the floor, wherein the end area of the hose device can be damaged by the relatively sharp edge of the oblique inlet nipple, which can lead to leakage.

This problem has been solved by the device disclosed in US-A-4,196,696. The hose device disclosed in this document is provided with a shock absorber or a strengthened portion, extending over a certain length between the end portion and the main hose portion of the hose device. The strengthened portion has a thicker wall thickness than the surrounding portions, and is provided with elongated projections evenly distributed around the circumference of the strengthened portion of the hose device. The strengthened portion will protect the hose device from the edge of the inlet nipple when the hose device is subjected to shocks of different kinds.

US-A-4,869,205 discloses further tubular hose device for a short milk conduit. The tubular hose device includes a strengthened portion with a greater wall thickness to be positioned at the end of the inlet nipple of a claw.

WO00/76298 discloses a similar tubular hose device for a short milk conduit. In this case the hose device has a varying wall thickness along the axial extension of the strengthened portion as well as along a peripheral direction. The problem to be solved by the hose device according to this prior art document is to ensure an optimal milk flow during milking by designing the hose device in the proximity of and at the strengthened portion in such a way that the inner cross-section of the hose device is circular when the hose device is mounted to the inlet nipple.

A problem with such a strengthened portion is that the greater wall thickness reduces the flexibility of the hose device, and renders the bending of the hose device more difficult. Consequently, there can be a risk of a less efficient closing of the short milk conduit so that air can enter the interior of the milking system when the teatcup is not attached to a teat.

### SUMMARY OF THE INVENTION

The object of the present invention is to provide a tubular hose device by which the problems mentioned above may be remedied. A further object is to provide a tubular hose device, which has a high strength and which permits bending of the hose device in the proximity of the inlet nipple. A still further object is to provide a tubular hose device which can be bent to close off the inner passage of the hose device in a tight and efficient manner.

This object is achieved by the tubular hose device initially defined, which is characterised by the features of the characterising portion of claim 1. Consequently, the transition segment has an upper part which has a greater wall thickness in a radial direction than the lower part. By such a design, a sufficient strength of the hose device in the proximity of the edge of the inlet nipple will be achieved by the upper part whereas the lower part of the transition segment permits an easy bending of the tubular hose device in the proximity of the inlet nipple for closing off the inner passage. Advantageously, the transition segment may have a length that is adapted to facilitate bending of the tubular hose device at the strengthened portion. Consequently, the transition segment may have a length that is sufficient for ensuring bending and thus a tight closing of the inner passage, and at the same time the length should ensure sufficient strength to the hose device. By the defined length a sufficient bending ability may be ensured.

According to an embodiment of the present invention, the transition segment has a length that is at least 15% of the length of the strengthened portion. More preferably, the transition segment has a length that is at least 20% of the length of the strengthened portion.

According to a further embodiment of the present invention, the upper part with the thicker wall thickness has an extension in a peripheral direction, which extension is less than 180°. Such a peripheral extension is sufficient for ensuring the strength of the hose device and the transition portion. The lower part of the transition segment thus may have a peripheral extension that is greater than 180°.

According to a further embodiment of the present invention, the inlet nipple has an end surface, which is obliquely cut, wherein the hose device in the mounted state is arranged to be attached to the inlet nipple in such a way that the end surface extends into the strengthened portion. By means of the upper portion having a thicker wall thickness the hose device is protected against the edge of the opening of the inlet nipple when the hose device is subjected to shocks.

Advantageously, the hose device is adapted to be located in such a rotary position in relation to the inlet nipple that the upper part of the transition segment faces the end surface of the inlet nipple. Thus, according to a further embodiment of the present invention, the first end portion includes positioning means for determining the rotary position of the hose device in relation to the inlet nipple. The first end portion may then have an end surface, wherein the positioning means includes a chamfer or bevel provided at the end surface of the first end portion. By such a chamfer, which may be substantially plane or concave, possibilities are created to position the end surface of the end portion to abutment against an outer wall surface of the claw even if the claw includes projecting portions reducing the space being available to the short milk hose. Advantageously, the chamfer and the upper part of the transition segment are located substantially straight after each other seen in the longitudinal direction. By such a design, the orientation in the rotary direction of the hose device is facilitated when the hose device is to be mounted to the inlet nipple.

According to a further embodiment of the present invention, the thicker wall thickness of the main segment and the transition segment is formed by an outwardly convex bead. The bead of the main segment may extend around the periphery of the main segment. The bead of the transition segment may extend over the upper part, but not over the lower part.

According to a further embodiment of the present invention, the strengthened portion has an outer side that is provided with grooves which extend in the longitudinal direction of the hose device over substantially the whole strengthened portion. The grooves may thus extend into the bead of the main segment and the transition segment. In such a way, the strength of the hose device is improved in this area, which is subjected to wear due to the hose device frequently being bent in a short milk conduit application. Advantageously, some of the grooves of the strengthened portion extend continuously in the longitudinal direction over the main segment and the upper part of the transition segment.

According to a further embodiment of the present invention, the device also includes a liner portion provided successively after the main hose portion, wherein the liner portion is adapted to be introduced into a teatcup shell and to receive a teat during milking of an animal.

### BRIEF DESCRIPTION OF THE DRAWINGS

The invention is now to be explained by means of the description of an embodiment and with reference to the drawings attached.
- Fig 1: discloses a perspective view of a hose device according to an embodiment of the invention.
- Fig 2: discloses a side view of a part of the hose device in Fig 1 in a non-mounted state.
- Fig 3: discloses a side view of a part of a hose device according to the prior art.
- Fig 4: discloses a sectional view of a part of the hose device in Fig 1 in a mounted state.

- Fig 5: discloses a sectional view a part of the hose device according to the prior art.
- Fig 6: discloses a sectional view of a part of the hose device in Fig 1 in a mounted state.

### DETAILED DESCRIPTION OF AN EMBODIMENT OF THE INVENTION

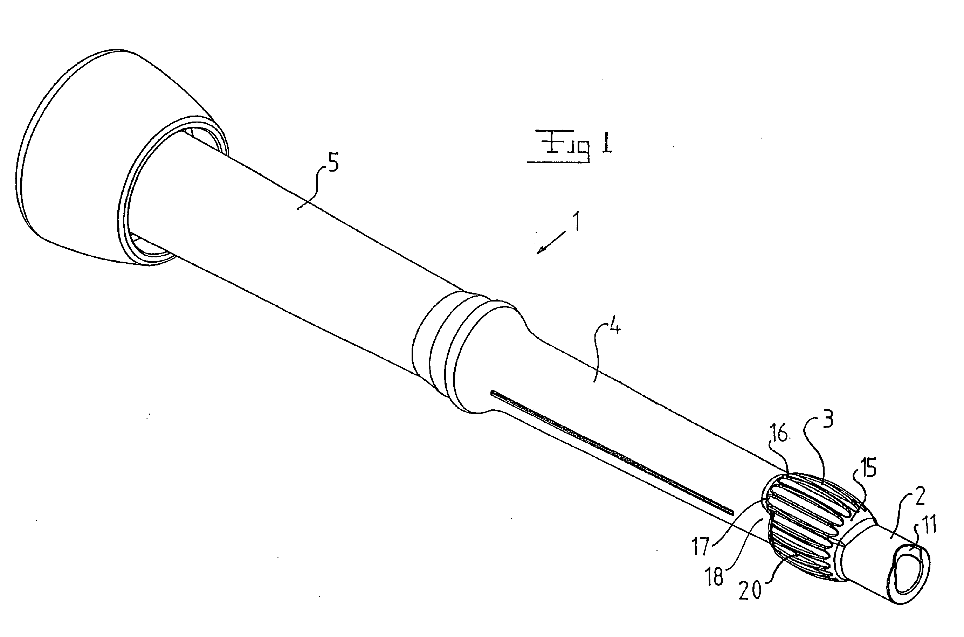

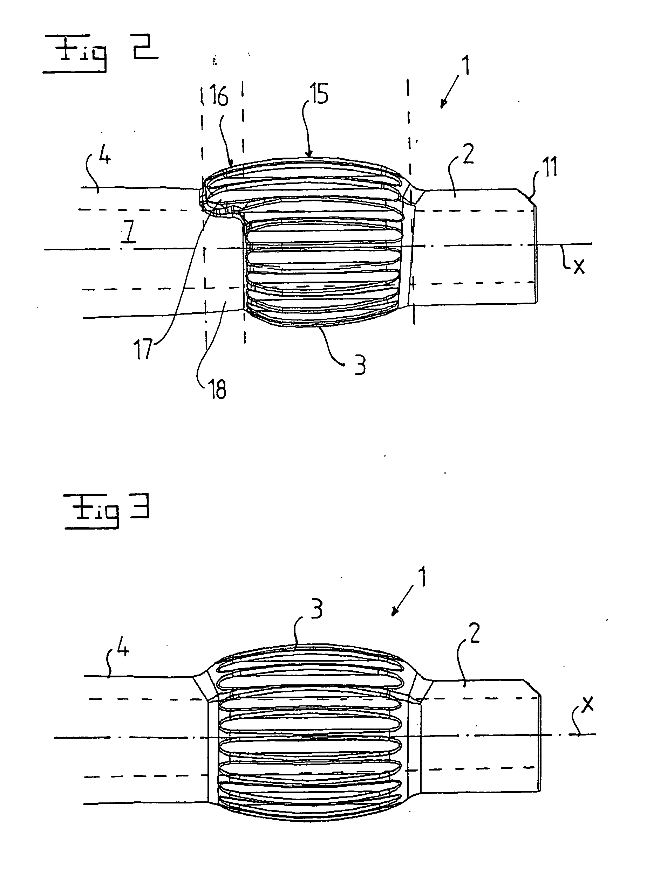

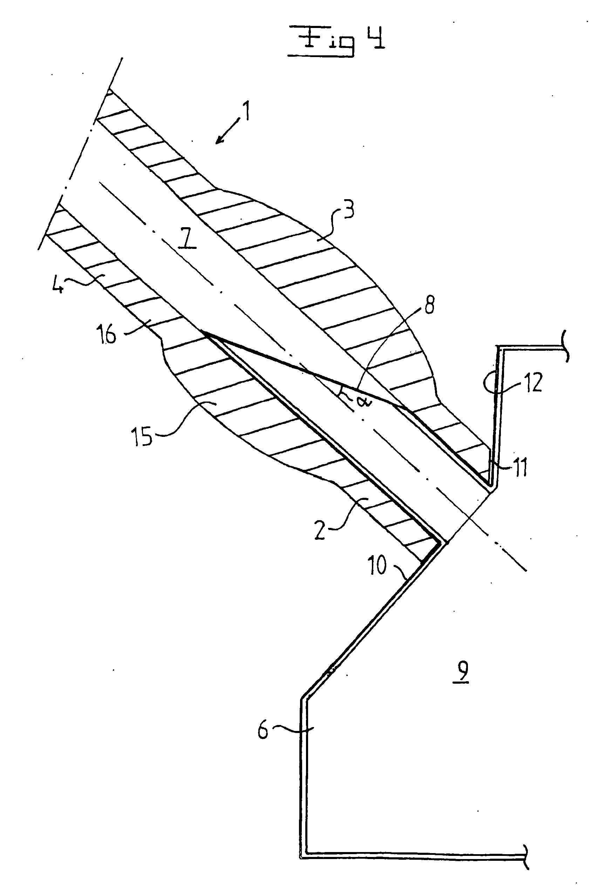

Fig 1 discloses a hose device in the form of a teatcup liner 1 for a teatcup of a milking member. The hose device or the teatcup liner 1 is tubular and includes the following successive portions: a first end portion 2, a strengthened portion 3, a main hose portion 4 and a liner portion 5.

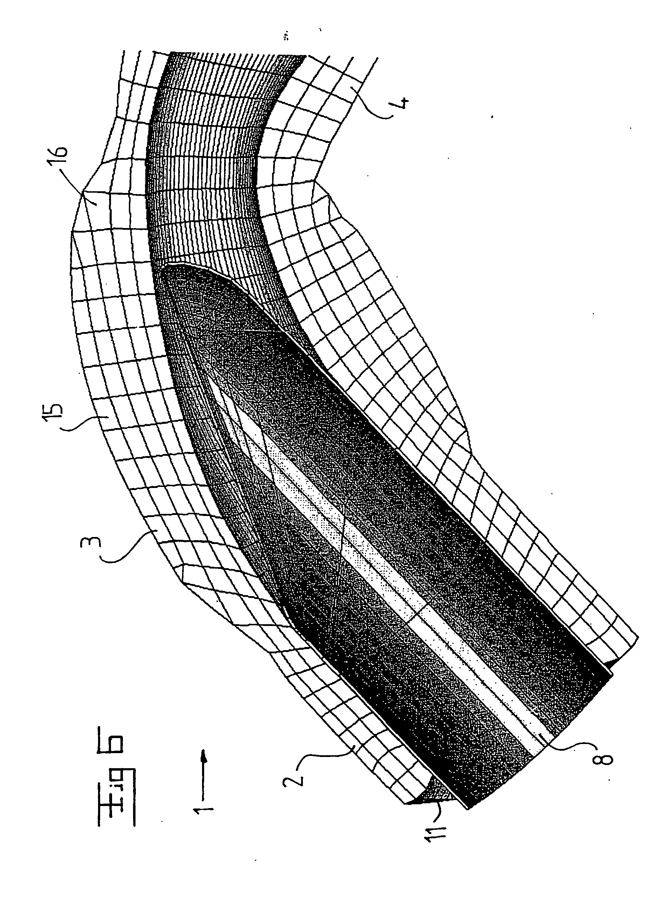

The liner portion 5 is adapted to be introduced and mounted in a shell (not shown) of the teatcup. The main hose portion 4, the strengthened portion 3 and the first end portion 2 form a short milk conduit between a claw 6, see Fig 4, and the liner portion 5 and the teatcup. The liner portion 5 includes in a conventional manner an opening through which the teat of an animal can be received during milking of the animal.

It is to be noted that the hose device according to this invention also may consist of the first end portion 2, the strengthened portion 3 and the main hose portion 4, wherein these three portions are separate from the liner portion 5 and connectable to the liner portion 5 in any suitable manner when the hose device is to be mounted in a teatcup shell. The present invention will now be exemplified with reference to the teatcup liner 1 disclosed even if the invention is applicable to other tubular hose devices intended to be mounted to pipe ends.

The teatcup liner 1 disclosed is manufactured in one single piece of a flexible and elastic rubber material. Such rubber materials are substantially incompressible, i.e. the volume of a piece of material remains substantially constant independently of the fact that the material is subjected to deformations.

The teatcup liner 1 includes a tubular wall defining an inner passage 7, which extends through the whole length of the teatcup liner 1, i.e. through the first end portion 2, the strengthened portion 3, the main hose portion 4 and the liner portion 5. The inner passage 7 of the teatcup liner 1 is arranged to transport milk from the teatcup mentioned above to the claw 6. The milk is then collected in the claw 6 and supplied from the claw 6 to a milk-collecting member (not shown) via a long milk conduit (not shown).

The teatcup liner 1 may be in a non-mounted state, as shown in Fig 1, or in a mounted state in which the teatcup liner 1 is mounted onto an inlet nipple 8 of the claw 6, see Fig 4. The teatcup liner 1 may also be in a substantially straight rest position, which is disclosed in Fig 1, wherein the teatcup liner 1 extends along a longitudinal axis x. The teatcup liner 1 has a substantially circular shape seen in substantially any cross-section perpendicular to the longitudinal axis x. The longitudinal axis x forms the centre axis of the inner passage 7 along the first end portion 2, the strengthened portion 3, the main hose portion 4 and the liner portion 5 when the teatcup liner 1 is in the rest state. The wall thickness of the teatcup liner 1 is substantially constant along the first end portion 2 and the main hose portion 4. At the strengthened portion 3, the teatcup liner 1 has a thicker wall thickness than at the first end portion 2 and the main hose portion 4, as will be explained below.

In the mounted state, the teatcup liner 1 is adapted to be attached to the inlet nipple 8. The nipple 8 is a short pipe forming an inlet to the inner space 9 of the claw 6, see Fig 4. The teatcup liner 1 is mounted onto the inlet nipple 8 in such manner that the inlet nipple 8 is introduce into the inner passage 7. The inlet nipple 8 has, as appears from Fig 4, an obliquely cut end surface, i.e. the longitudinal axis x is inclined in relation to the end surface by an acute angle α. The teatcup liner 1 is mounted to the inlet nipple 8 in such a way that the teatcup liner 1 extends to abutment against an outer wall surface 10 of the claw 6. The first end portion 2 includes positioning means for determining the longitudinal position of the first end portion 2 in relation to the inlet nipple 8 and the rotary position of the first end portion 2 in relation to the inlet nipple 8. The positioning means includes in the embodiment disclosed a chamfer 11 provided on an end surface of the first end portion 2, i.e. an upper part of the end surface of the first end portion is sloping and has an angle of inclination to the longitudinal axis x. As appears from Fig 4, the chamfer 11 will abut an outer surface area 12 of the claw 6. This outer surface area 12 is formed by a part of the claw 6, which extends upwardly from the outer wall surface 10 and which is arranged to include different functions, such as for instance a closing valve. The chamfer 11 may be a substantially plane surface or a curved, concave surface. Consequently, the chamfer 11 permits, in the example disclosed, the teatcup liner 1 to be displaced to abutment against the outer wall surface 10 of the claw 6. Consequently, the position of the inlet nipple 8 in the inner passage 7 in the longitudinal direction x of the teatcup liner 1 is defined when the teatcup liner 1 is in the mounted state disclosed in Fig 4. The positioning means may of course be obtained by another design than a chamfer, for instance by means of a longitudinal slot in the first end portion in combination with a corresponding projection on the inlet nipple 8.

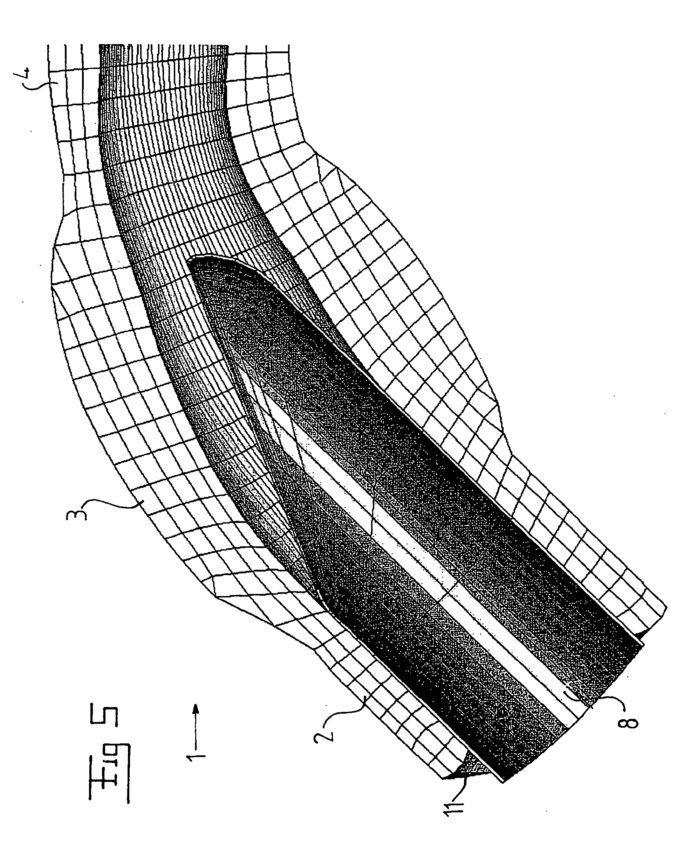

The strengthened portion 3 includes a main segment 15 adjoining the first end portion 2, and a transition segment 16 adjoining the main hose portion 4. Furthermore, the main segment 15 adjoins the transition segment 16. Fig 2 discloses more closely the strengthened portion 3 according to this invention with the mains segment 15 and the transition segment 16, whereas Fig 3 discloses a strengthened portion without two such different segment. The transition segment also exhibits an upper part 17 and an opposite lower part 18. In the mounted state, the end surface of the inlet nipple 8 is, as appears from Fig 4, located in the strengthened portion 3. More precisely, an outer tip of the end surface of the inlet nipple 8 is located approximately where the transition segment 16 adjoins the main segment 15. An inner end point of the end surface of the inlet nipple 8, i.e. a point located more closely to the claw 6, is located approximately where the strengthened portion 3 adjoins the first end portion 2. The end surface or opening of the inlet nipple 8 thus extends substantially over the whole length of the main segment 15. In the embodiment disclosed the inlet nipple 8 has a circular cross-section, which means that the end surface or opening of the inlet nipple will have an oval or elliptic shape. By means of the chamfer 11 or any other positioning means, the teatcup liner 1 will in the mounted state be located in such a rotary position in relation to the inlet nipple 8 that the upper part 17 of the transition segment 16 faces the end surface of the inlet nipple 8.

The main segment 15 of the strengthened portion 3 has a wall thickness that is thicker than the wall thickness of the first end portion 2 and of the main hose portion 4. The upper part 17 of the transition segment 16 has a wall thickness that is thicker than the wall thickness of the first end portion 2 and of the main hose portion 4. The lower part 18 of the transition segment 16 has a wall thickness that is substantially equal to the wall thickness of the first end portion 2 and of the main hose portion 4. The thicker wall thickness of the main segment 15 and the upper part 17 of the transition segment 16 is formed by an outwardly convex bead. The bead of the main segment 15 extends around the whole periphery of the main segment 15. Moreover, the bead of the transition segment 16 extends over the whole upper part 17, but not over the lower part 18.

The main segment 15 has a longer length in the longitudinal direction x than the transition segment 16. In particular, the transition segment 16 has a length that is adapted to facilitate bending of the tubular teatcup liner 1 at the strengthened portion 3 so that the wall surface of the inner passage may abut in a tight manner the end surface or opening of the inlet nipple 8. The inventor has found that the transition segment 16 then may have a length that is at least 10% of the length of the strengthened portion 3, preferably a length that is at least 15% of the length of the strengthened portion 3 or more preferably a length that is at least 20% of the length of the strengthened portion 3. The transition segment 16 may also have a length which exceeds the values defined above. Thus the transition segment 16 may for instance in certain cases be 25%, 30% or even 35% of the length of the strengthened portion. The total length of the strengthened portion may be for instance 10, 15, 20, 25, 30 or 35 mm.

As appears from in particular Fig 2, the upper part 17 of the transition segment 16 has an extension in a peripheral direction, which extension is less than 180°, which means that the peripheral extension of the lower part 18 is greater than 180°.

Fig 5 discloses a teatcup liner according to the prior art where the teatcup liner after milking is hanging down over the inlet nipple 8. As appears there is still a substantial gap between the wall surface of the inner passage 7 and the end surface of the inlet nipple 8. Fig 6 discloses a teatcup liner 1 according to the invention, which is attached to the inlet nipple 8. The teatcup liner is not attached to a teat and is hanging down from the inlet nipple 8. As appears, the teatcup liner is bent to a larger extent and thus closes substantially the inner passage 7 since the wall surface of the inner passage 7 abuts substantially the end surface of the inlet nipple 8.

The strengthened portion has an outer side that is provided with longitudinal recesses or grooves 20 which extend in parallel to each other and to the longitudinal direction x of the teatcup liner 1 over substantially the whole strengthened portion 3. Seen in a cross-sectional view, the main segment 15 of the strengthened portion 3 will then have a shape similar to a tooth wheel. Some of the grooves 20 extend continuously in the longitudinal direction x over the main segment 15 and the upper part 17 of the transition segment 16.

The present invention is not limited to the embodiment disclosed but may be varied and modified within the scope of the following claims. It is in particular to be noted that the invention also is applicable to other hose devices than teatcup liners 1. For instance, it may be applied to the short milk conduit or the long milk conduit between the claw and the milk-collecting member, or to other hoses of a milking machine.

## Claims

1. A tubular hose device forming an inner passage (7) for transporting milk to a claw (6) having at least one inlet nipple (8), the hose device including along a longitudinal direction the following successive portions:
a first end portion (2);
a strengthened portion (3); and
a main hose portion (4),
the first end portion (2) being adapted to be attached to the inlet nipple (8) in a mounted state of the hose device by having the nipple introduced into the first end portion, the strengthened portion (3) including a main segment (15) adjoining the first end portion (2) and having a wall thickness that is thicker than the wall thickness of the main hose portion (4),
wherein the strengthened portion (3) also includes a transition segment (16) adjoining the main hose portion (4), wherein the transition segment (16) has an upper part (17) and an opposite lower part (18) and wherein the upper part (17) of the transition segment (16) has a wall thickness that is thicker than the wall thickness of the first end portion (3) and the main hose portion (4), whereas the lower part (18) of the transition segment (16) has a wall thickness that is substantially equal to the wall thickness of the first end portion (3) and the main hose portion (4), **characterised in that** the transition segment (16) has a length that is at least 10% of the length of the strengthened portion (3).

2. A hose device according to claim 1, **characterised in that** the transition segment (16) has a length that is adapted to facilitate bending of the tubular hose device at the strengthened portion (3).

3. A hose device according to any one of claims 1 and 2,
**characterised in that** the transition segment (16) has a length that is at least 15% of the length of the strengthened portion (3).

4. A hose device according to any one of claims 1 and 2,
**characterised in that** the transition segment (16) has a length that is at least 20% of the length of the strengthened portion (3).

5. A hose device according to any one of the preceding claims, **characterised in that** the upper part (17) with the thicker wall thickness has an extension in a peripheral direction, which extension is less than 180°.

6. A hose device according to any one of the preceding claims, wherein the inlet nipple (8) has an end surface, which is obliquely cut, **characterised in that** the hose device in the mounted state is arranged to be attached to the inlet nipple (8) in such a way that the end surface extends into the strengthened portion (3).

7. A hose device according to claim 6, **characterised in that** the hose device is adapted to be located in such a rotary position in relation to the inlet nipple (8) that the upper part of the transition segment (16) faces the end surface of the inlet nipple (8).

8. A device according to any one the preceding claims,
**characterised in that** the first end portion (2) includes positioning means for determining the rotary position of the hose device in relation to the inlet nipple (8).

9. A device according to any one the preceding claims,
**characterised in that** the first end portion (2) has an end surface, wherein the positioning means includes a chamfer (11) provided at the end surface of the first end portion (2).

10. A device according to claim 9, **characterised in that** the chamfer (11) and upper part (17) of the transition segment (16) are located substantially straight after each other seen in the longitudinal direction (x).

11. A hose device according to any one of the preceding claims, **characterised in that** the thicker wall thickness of the main segment (15) and the transition segment (16) is formed by an outwardly convex bead.

12. A hose device according to claim 11, **characterised in that** the bead of the main segment (15) extends around the periphery of the main segment.

13. A hose device according to any one of claims 11 and 12,
**characterised in that** the bead of the transition segment (16) extends over the upper part (17).

14. A hose device according to any one of the preceding claims, **characterised in that** the strengthened portion (3) has an outer side that is provided with grooves (20) which extend in the longitudinal direction (x) of the hose device over substantially the whole strengthened portion (3).

15. A hose device according to claim 14, **characterised in that** some of the grooves (20) extend continuously in the longitudinal direction (x) over the main segment (15) and the upper part of the transition segment (16).

16. A hose device according to any one of the preceding claims, **characterised in that** the device also includes a liner portion (5) provided successively after the main hose portion (4), wherein the liner portion (5) is adapted to be introduced into a teatcup shell and to receive a teat during milking of an animal.

## Patentansprüche

1. Röhrenförmige Schlauchvorrichtung, die einen inneren Durchgang (7) zum Transportieren von Milch an ein Sammelstück (6) bildet, das mindestens einen Einlassnippel (8) hat, wobei die Schlauchvorrichtung entlang einer Längsrichtung die folgenden aufeinanderfolgenden Abschnitte aufweist:
einen ersten Endabschnitt (2);
einen verstärkten Abschnitt (3); und
einen Hauptschlauchabschnitt (4),
wobei der erste Endabschnitt (2) so angepasst ist, dass er in einem befestigten Zustand der Schlauchvorrichtung an den Einlassnippel (8) angesetzt werden kann, indem der Nippel in den ersten Endabschnitt eingeführt wird,
wobei der verstärkte Abschnitt (3) ein Hauptsegment (15) umfasst, das an den ersten Endabschnitt (2) angrenzt und eine Wanddicke hat, die dicker ist als die Wanddicke des Hauptschlauchabschnittes (4),
wobei der verstärkte Abschnitt (3) weiterhin ein Übergangssegment (16) umfasst, das an den Hauptschlauchabschnitt (4) angrenzt, wobei das Übergangssegment (16) einen oberen Teil (17) sowie einen gegenüberliegenden unteren Teil (18) hat und wobei der obere Teil (17) des Übergangssegmentes (16) eine Wanddicke hat, die dicker ist als die Wanddicke des ersten Endabschnittes (2) und des Hauptschlauchabschnittes (4), wohingegen der untere Teil (18) des Übergangssegmentes (16) eine Wanddicke hat, die im Wesentlichen gleich der Wanddicke des ersten Endabschnittes (2) und des Hauptschlauchabschnittes (4) ist,
**dadurch gekennzeichnet, dass** das Übergangssegment (16) eine Länge hat, die mindestens 10% der Länge des verstärkten Abschnitts (3) beträgt.

2. Schlauchvorrichtung nach Anspruch 1, **dadurch gekennzeichnet, dass** das Übergangssegment (16) eine Länge hat, die so angepasst ist, dass die röhrenförmige Schlauchvorrichtung am verstärkten Abschnitt (3) gebogen werden kann.

3. Schlauchvorrichtung nach einem der Ansprüche 1 und 2, **dadurch gekennzeichnet, dass** das Übergangssegment (16) eine Länge hat, die mindestens 15% der Länge des verstärkten Abschnittes (3) beträgt.

4. Schlauchvorrichtung nach einem der Ansprüche 1 und 2, **dadurch gekennzeichnet, dass** das Übergangssegment (16) eine Länge hat, die mindestens 20% der Länge des verstärkten Abschnittes (3) beträgt.

5. Schlauchvorrichtung nach einem der vorgegangenen Ansprüche, **dadurch gekennzeichnet, dass** der obere Teil (17) mit der dickeren Wanddicke eine Ausdehnung in einer Umfangsrichtung hat, die kleiner ist als 180°.

6. Schlauchvorrichtung nach einem der vorangegangenen Ansprüche, wobei der Einlassnippel (8) eine Endfläche hat, die schräg angeschnitten ist, **dadurch gekennzeichnet, dass** die Schlauchvorrichtung im befestigten Zustand an den Einlassnippel (8) auf eine solche Weise angesetzt wird, dass sich die Endfläche in den verstärkten Abschnitt (3) erstreckt.

7. Schlauchvorrichtung nach Anspruch 6, **dadurch gekennzeichnet, dass** die Schlauchvorrichtung in einer solchen Drehposition in Bezug auf den Einlassnippel (8) positioniert ist, dass der obere Teil des Übergangssegmentes (16) der Endfläche des Einlassnippels (8) zugewandt ist.

8. Vorrichtung nach einem der vorangegangenen Ansprüche, **dadurch gekennzeichnet, dass** der erste Endabschnitt (2) eine Positioniereinrichtung zum Bestimmen der Drehposition der Schlauchvorrichtung in Bezug auf den Einlassnippel (8) aufweist.

9. Vorrichtung nach einem der vorangegangenen Ansprüche, **dadurch gekennzeichnet, dass** der erste Endabschnitt (2) eine Endfläche hat, wobei die Positioniereinrichtung eine Abschrägung (11) aufweist, die an der Endfläche des ersten Endabschnittes (2) vorgesehen ist.

10. Vorrichtung nach Anspruch 9, **dadurch gekennzeichnet, dass** die Abschrägung (11) und der obere Teil (17) des Übergangssegmentes (16) in Längsrichtung (x) gesehen im Wesentlichen gleich nacheinander angeordnet sind.

11. Schlauchvorrichtung nach einem der vorangegangenen Ansprüche, **dadurch gekennzeichnet, dass** die dickere Wanddicke des Hauptsegments (15) und des Übergangssegmentes (16) durch eine auswärts konvexe Wulst gebildet wird.

12. Schlauchvorrichtung nach Anspruch 11, **dadurch gekennzeichnet, dass** sich die Wulst des Segmentes (15) um den Umfang des Hauptsegmentes herum erstreckt.

13. Schlauchvorrichtung nach einem der Ansprüche 11 und 12, **dadurch gekennzeichnet, dass** sich die Wulst des Übergangssegmentes (16) über den oberen Teil (17) erstreckt.

14. Schlauchvorrichtung nach einem der vorangegangenen Ansprüche, **dadurch gekennzeichnet, dass** der verstärkte Abschnitt (3) eine Außenseite hat, die mit Rillen (20) versehen ist, die sich in Längsrichtung (x) der Schlauchvorrichtung über im Wesentlichen den gesamten verstärkten Abschnitt (3) erstrecken.

15. Schlauchvorrichtung nach Anspruch 14, **dadurch gekennzeichnet, dass** sich einige der Rillen (20) kontinuierlich in Längsrichtung (x) über das Hauptsegment (15) und den oberen Teil des Übergangssegmentes (16) erstrecken.

16. Schlauchvorrichtung nach einem der vorangegangenen Ansprüche, **dadurch gekennzeichnet, dass** die Vorrichtung weiterhin einen Gummiabschnitt (5) umfasst, der nach dem Hauptschlauchabschnitt (4) folgt, wobei der Gummiabschnitt (5) in ein Zitzenbechergehäuse eingeführt werden und während des Melkens eines Tieres eine Zitze aufnehmen kann.

## Revendications

1. Dispositif de tuyau tubulaire formant un passage intérieur (7) pour transporter du lait vers une griffe (6) comportant au moins un raccord d'entrée (8), le dispositif de tuyau comprenant le long d'une direction longitudinale les parties successives suivantes :
une première partie d'extrémité (2) ;
une partie renforcée (3) ; et
une partie de tuyau principale (4),
la première partie d'extrémité (2) étant adaptée pour être attachée au raccord d'entrée (8) dans un état monté du dispositif de tuyau en ayant le raccord introduit dans la première partie d'extrémité,
la partie renforcée (3) comprenant un segment principal (15) attenant à la première partie d'extrémité (2) et ayant une épaisseur de paroi plus épaisse que l'épaisseur de paroi de la partie de tuyau principale (4),
dans lequel la partie renforcée (3) comprend également un segment de transition (16) attenant à la partie de tuyau principale (4), dans lequel le segment de transition (16) comporte une partie supérieure (17) et une partie inférieure opposée (18) et dans lequel la partie supérieure (17) du segment de transition (16) a une épaisseur de paroi plus épaisse que l'épaisseur de paroi de la première partie d'extrémité (2) et de la partie de tuyau principale (4), alors que la partie inférieure (18) du segment de transition (16) a une épaisseur de paroi sensiblement égale à l'épaisseur de paroi de la première partie d'extrémité (2) et de la partie de tuyau principale (4),
**caractérisé en ce que** le segment de transition (16) a une longueur qui correspond à au moins 10 % de la longueur de la partie renforcée (3).

2. Dispositif de tuyau selon la revendication 1, **caractérisé en ce que** le segment de transition (16) a une longueur qui est adaptée pour faciliter le pliage du dispositif de tuyau tubulaire au niveau de la partie renforcée (3).

3. Dispositif de tuyau selon l'une quelconque des revendications 1 et 2, **caractérisé en ce que** le segment de transition (16) a une longueur qui correspond à au moins 15 % de la longueur de la partie renforcée (3).

4. Dispositif de tuyau selon l'une quelconque des revendications 1 et 2, **caractérisé en ce que** le segment de transition (16) a une longueur qui correspond à au moins 20 % de la longueur de la partie renforcée (3).

5. Dispositif de tuyau selon l'une quelconque des revendications précédentes, **caractérisé en ce que** la partie supérieure (17) à l'épaisseur de paroi plus épaisse présente une extension dans une direction périphérique, laquelle extension est inférieure à 180°.

6. Dispositif de tuyau selon l'une quelconque des revendications précédentes, dans lequel le raccord d'entrée (8) présente une surface d'extrémité, qui est obliquement découpée, **caractérisé en ce que** le dispositif de tuyau dans l'état monté est agencé pour être attaché au raccord d'entrée (8) d'une manière telle que la surface d'extrémité s'étend dans la partie renforcée (3).

7. Dispositif de tuyau selon la revendication 6, **caractérisé en ce que** le dispositif de tuyau est adapté pour être situé dans une telle position de rotation par rapport au raccord d'entrée (8) que la partie supérieure du segment de transition (16) fait face à la surface d'extrémité du raccord d'entrée (8).

8. Dispositif selon l'une quelconque des revendications précédentes, **caractérisé en ce que** la première partie d'extrémité (2) comprend un moyen de positionnement destiné à déterminer la position de rotation du dispositif de tuyau par rapport au raccord d'entrée (8).

9. Dispositif selon l'une quelconque des revendications précédentes, **caractérisé en ce que** la première partie d'extrémité (2) présente une surface d'extrémité, dans lequel le moyen de positionnement comprend un chanfrein (11) disposé au niveau de la surface d'extrémité de la première partie d'extrémité (2).

10. Dispositif selon la revendication 9, **caractérisé en ce que** le chanfrein (11) et la partie supérieure (17) du segment de transition (16) se situent sensiblement juste l'un après l'autre, vus dans la direction longitudinale (x).

11. Dispositif de tuyau selon l'une quelconque des revendications précédentes, **caractérisé en ce que** l'épaisseur de paroi plus épaisse du segment principal (15) et du segment de transition (16) est formée par un bourrelet convexe vers l'extérieur.

12. Dispositif de tuyau selon la revendication 11, **caractérisé en ce que** le bourrelet du segment principal (15) s'étend autour de la périphérie du segment principal.

13. Dispositif de tuyau selon l'une quelconque des revendications 11 et 12, **caractérisé en ce que** le bourrelet du segment de transition (16) s'étend sur la partie supérieure (17).

14. Dispositif de tuyau selon l'une quelconque des revendications précédentes, **caractérisé en ce que** la partie renforcée (3) comporte un côté extérieur qui est doté de rainures (20) qui s'étendent dans la direction longitudinale (x) du dispositif de tuyau sur pratiquement toute la partie renforcée (3).

15. Dispositif de tuyau selon la revendication 14, **caractérisé en ce que** certaines des rainures (20) s'étendent en continu dans la direction longitudinale (x) sur le segment principal (15) et la partie supérieure du segment de transition (16).

16. Dispositif de tuyau selon l'une quelconque des revendications précédentes, **caractérisé en ce que** le dispositif comprend également une partie de manchon (5) disposée successivement après la partie de tuyau principale (4), dans lequel la partie de manchon (5) est adaptée pour être introduite dans une coque de gobelet trayeur et pour recevoir un trayon pendant la traite d'un animal.
